# EUROPÄISCHE PATENTSCHRIFT

(11) **EP 1 207 068 B1**
(45) Veröffentlichungstag und Bekanntmachung des Hinweises auf die Patenterteilung: **11.04.2007**
(21) Anmeldenummer: 01126170.8
(22) Anmeldetag: 03.11.2001
(51) Int. Cl.: B60J 7/047, B60J 7/043

(54) **Fahrzeugdach mit wenigstens zwei hintereinander angeordneten Deckeln**
Vehicle roof with at least two panels arranged one behind the other
Toit de véhicule avec au moins deux panneaus installés l'un derrière l'autre

(30) Priorität: 16.11.2000 DE 10057167
(43) Veröffentlichungstag der Anmeldung: 22.05.2002
(73) Patentinhaber: Webasto Vehicle Systems International GmbH, 82131 Stockdorf (DE)
(72) Erfinder: De Gaillard, Francois, 85390 Mouilleron en pareds (FR)
(74) Vertreter: Wiese, Gerhard

(56) Entgegenhaltungen:
- EP-A- 0 348 073
- WO-A-00/06404
- DE-A- 3 802 380
- DE-A- 4 008 145
- DE-A- 4 227 400
- US-A- 4 498 701
- US-A- 4 786 102
- US-A- 5 197 779

## Beschreibung

Die Erfindung betrifft ein Fahrzeugdach mit wenigstens zwei hintereinander angeordneten Deckeln, die gemeinsam eine Dachöffnung verschließen, und von denen wenigstens ein Deckel zum Freigeben eines Teils der Dachöffnung unter den anderen Deckel verschiebbar ist, gemäß dem Oberbegriff des Patentanspruchs 1.

Ein derartiges Fahrzeugdach ist aus der US-A-4 498 701 bekannt. Bei diesem ist ein hinterer Deckel, unter dem eine feste Platte angeordnet ist, anhebbar und ein vorderer, gegenüber dem hinteren Deckel etwas schmalerer und trapezförmigen Deckel ist in den Zwischenraum zwischen dem hinteren Deckel und der Platte verfahrbar. Des hintere Teil der Dachöffnung ist rechteckig. Der Dachöffnung kann nur im Bereich des vorderen Deckels zu Lüftungszwecken freigelegt werden.

Ein weiteres Fahrzeugdach ist aus der DE 42 27 400 C2 bekannt. Die Deckel weisen dort ebenfalls eine rechteckige Form auf und passen sich daher schlecht an sich dynamisch nach hinten verbreiternde, keilförmige Karosserieformen an. Der abgesenkte Deckel beeinträchtigt darüber hinaus auch die Kopffreiheit der Insassen. Aus der DE 43 06 451 C1 ist ein Faltdach bekannt geworden, das sich mittels an den Enden quer verschiebbar geführter Spriegel an eine sich nach vorn erweiternde Dachöffnung anpaßt. Ferner ist aus der DE 100 02 457 A1 ein Dach mit einem Deckel bekannt, der eine sich nach hinten verjüngende Dachöffnung wahlweise verschließt oder durch Verschiebung längs nicht paralleler Führungen freigibt.

Aufgabe der Erfindung ist es, ein Fahrzeugdach zu schaffen, bei dem zwei hintereinander angeordnete, an die Dachkontur anpassbare Deckel mit einer einfachen Mechanik betätigbar sind. Diese Aufgabe wird durch die Merkmale des Patentansprüchs 1 gelöst.

Durch die sich quer zur Verschieberichtung des Deckels verbreiternde Dachöffnung wird die Möglichkeit geschaffen, in deren erweitertem Bereich die Führungs- und/oder Ausstellmittel für den breiteren Deckel vorzusehen.

Die Führungsschienen des verschiebbaren Deckels erstrecken sich quer zur Fahrzeuglängsachse gesehen vorzugsweise innerhalb der Führungs- und/oder Ausstellmittel des anderen Deckels.

Eine bevorzugte Ausführungsform sieht vor, daß die Dachöffnung die Form eines Trapezes aufweist. Hierdurch läßt sich die Form der Dachöffnung hervorragend an die Form der gesamten Dachkontur auch bei einem sich keilförmig nach hinten erweiternden Fahrzeug anpassen.

Gemäß alternativer Ausführungsformen sind jedoch auch solche Dachöffnunggen möglich, bei denen die Seitenkanten einer Kurvenbahn folgen. Öffnungsfähige Fahrzeugdächer dieser Art sind als Gestaltungs- und Differenzierungselemente beim Design neuer Fahrzeuge einsetzbar.

Bevorzugt ist vorgesehen, daß in Fahrtrichtung vorn ein schmalerer Deckel angeordnet ist. Dieser ist bevorzugt unter den dahinterliegenden breiteren Deckel verfahrbar. Für eine besonders einfache Mechanik ist es vorteilhaft, wenn der breitere Deckel aus seiner Schließposition heraus mittels einer einfachen Anhebemechanik anhebbar ist, während der schmalere Deckel mit einer einfachen Verschiebemechanik unter den angehobenen breiteren Deckel verfahrbar ist.

Nachfolgend werden Ausführungsbeispiele des Sonnendaches unter Bezugnahme auf die Zeichnungen näher erläutert. Es zeigt:
- Fig. 1: eine schematische perspektivische Ansicht eines Fahrzeugdachs mit zwei trapezförmigen Deckeln,
- Fig. 2: einen schematischen Längsschnitt durch das geschlossene Fahrzeugdach gemäß Fig. 1,
- Fig. 3: einen schematischen Längsschnitt durch das geöffnete Fahrzeugdach gemäß Fig. 1,
- Fig. 4: eine schematische Draufsicht auf die Deckel und deren Führungsbereiche,
- Fig.5: eine schematische perspektivische Ansicht des Fahrzeugdachs gemäß Fig. 1 in geöffneter Position
- Fig. 6A-D: ein Fahrzeug mit einem Zweideckel-Dach in verschiedenen Öffnungszuständen,
- Fig. 7A-D: ein Fahrzeug mit einem Zweideckel-Dach in verschiedenen Öffnungszuständen, bei dem als Variante zum ersten Ausführungsbeispiel auch der vordere Deckel anhebbar ist,
- Fig. 8-10: verschiedene Varianten von Zweideckel-Dächern mit unterschiedlicher Seitenkontur, und
- Fig.11: eine schematische Darstellung der Betätigungsmittel für das Fahrzeugdach gemäß den Fig. 1-6.

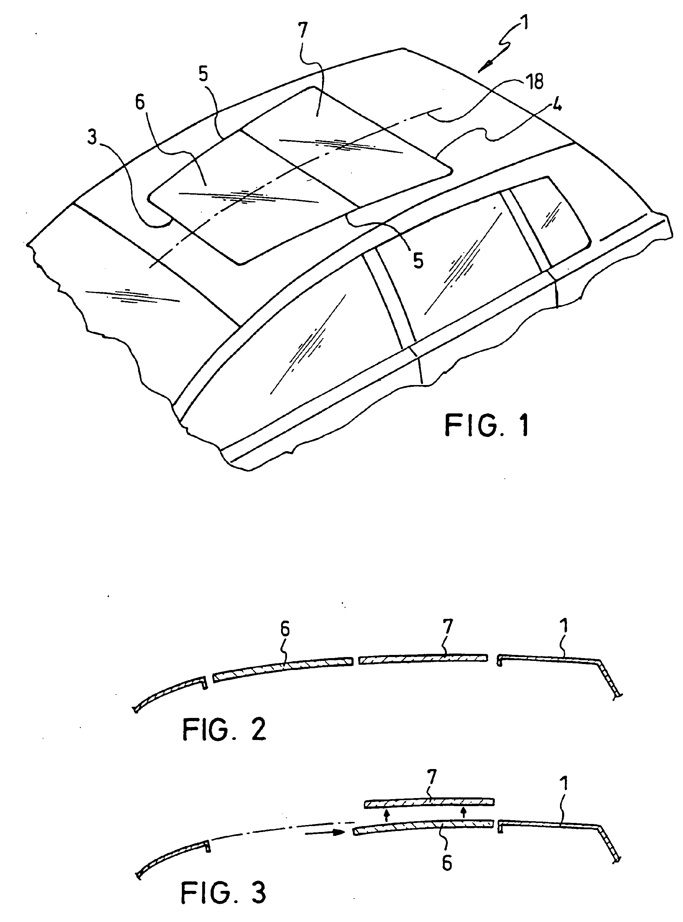

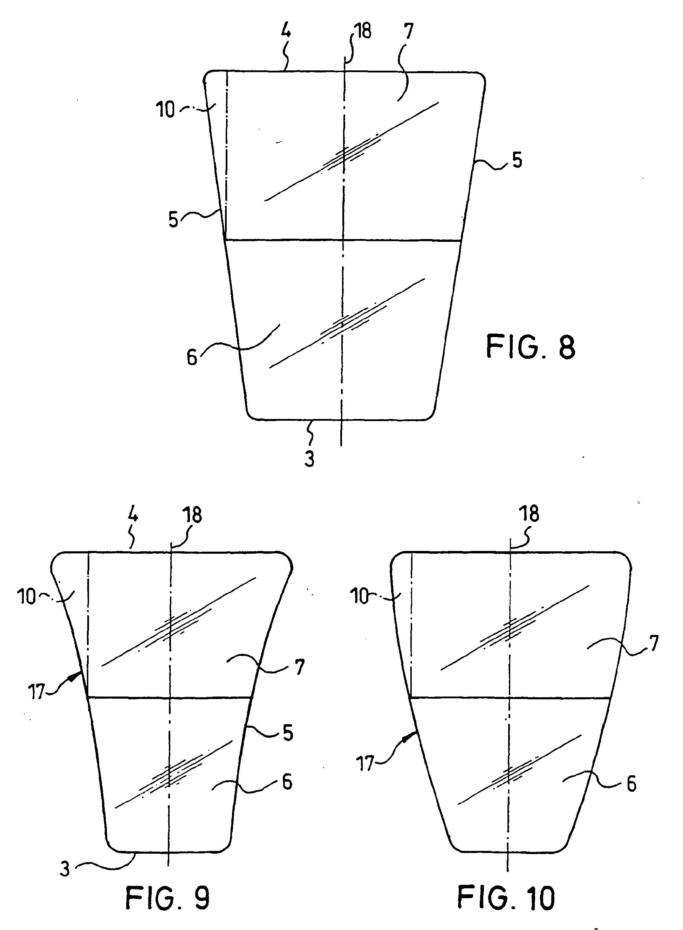

Ein in den Fig. 1 bis 6 dargestelltes erstes Ausführungsbeispiel zeichnet sich dadurch aus, daß bei einem Fahrzeugdach 1 eine Dachöffnung 2 durch zwei hintereinander angeordnete Deckel 6 bzw. 7 verschließbar oder zumindestens teilweise freigebbar ist, wobei die Dachöffnung 2 ausgehend von ihrer Vorderkante 3 zu ihrer Hinterkante 4 eine sich verbreiternde Form aufweist, bei der die Seitenkanten 5 gerade sind, so daß insgesamt die Form eines Trapez entsteht, oder, gemäß der in den Figuren 9 und 10 gezeichneten Alternative die Seitenkanten 5 die Kontur einer Kurvenbahn 17 annehmen.

Beide Deckel 6 und 7 sind unmittelbar hintereinanderliegend und bevorzugt in der Schließposition bündig zueinander angeordnet. Somit grenzt die Vorderkante 6V des vorderen Deckels 6 unmittelbar an die Vorderkante 3 der Dachöffnung 2 an. Die Hinterkante 6H des vorderen Deckels 6 grenzt unmittelbar an die Vorderkante 7V des hinteren Deckels 7 an. Die Hinterkante 7H des hinteren Deckels 7 grenzt unmittelbar an die Hinterkante 4 der Dachöffnung 2 an.

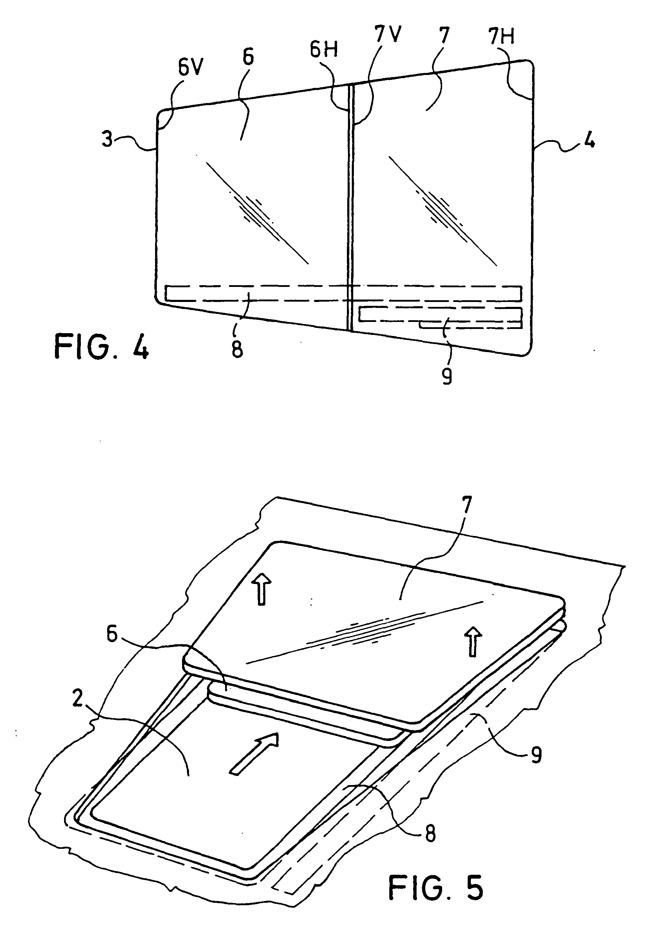

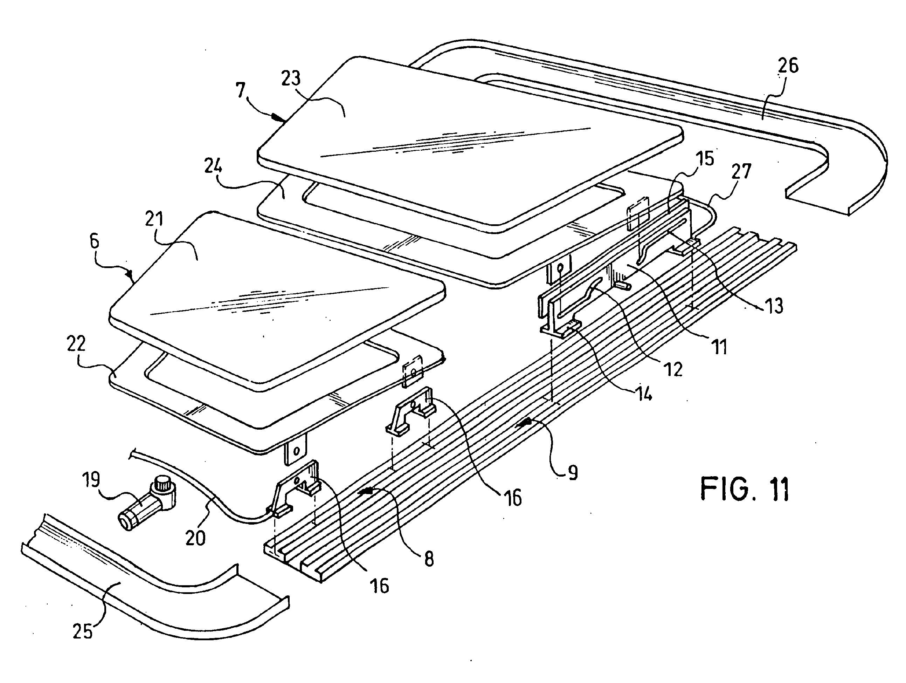

Wie in Figur 2 und 3 dargestellt, ergeben sich unterschiedliche Öffnungsmöglichkeiten dadurch, daß der hintere Deckel 7 anhebbar ist und in einem zweiten Öffnungsstadium der vordere Deckel 6 auf seinem ursprünglichen Niveau mittels einer einfachen Verschiebemechanik unter den Deckel 7 verfahrbar ist. Hierzu sind die parallel zueinander angeordneten Führungsschienen 8 bzw. 9, wie aus den Figuren 4 und 5 zu entnehmen, derart angeordnet, daß sich die Führungsschienen 9 für den hinteren Deckel 7 ausschließlich im hinteren verbreiterten Bereich der Dachöffnung 2 befinden, während die Führungsschienen 8 für den vorderen Deckel 6 sich innenliegend davon über die gesamte Länge der Dachöffnung 2 erstrecken. Um ein einheitliches Führungsschienenprofil verwenden zu können, können jedoch auch die Führungsschienen 9 unter dem festen Fahrzeugdach 1 im unsichtbaren Bereich liegend bis nach vorne geführt sein, wie dies in den Figuren 5 und 11 gezeigt ist.

Die trapezförmige oder auch von einer seitlichen Kurvenbahn 17 begrenzte Kontur der Dachöffnung 2 und dem entsprechend der Deckel 6 bzw. 7 ist vorzugsweise ausgehend von einer Dachmitte 18 symmetrisch. Es sind jedoch auch asymmetrische Formen realisierbar. Der sich aufgrund der Erweiterung der Dachöffnung im hinteren Bereich seitlich ergebende erweiterte Bereich der Dachöffnung 2 ist in den Figuren 8 bis 10 mit der Bezugszahl 10 bezeichnet. In diesem erweiterten Bereich 10 sind, wie in Figur 4 dargestellt, die Führungsschienen 9 für den hinteren Deckel 7 angeordnet. Wenn vorstehend von vorderem Deckel 6 und hinterem Deckel 7 gesprochen wird, so ist für den Fachmann klar, daß diese Anordnung auch auf dem Fahrzeug in umgekehrter Reihenfolge erfolgen kann, wenn dies bei einer bestimmten Dachkontur gewünscht wird.

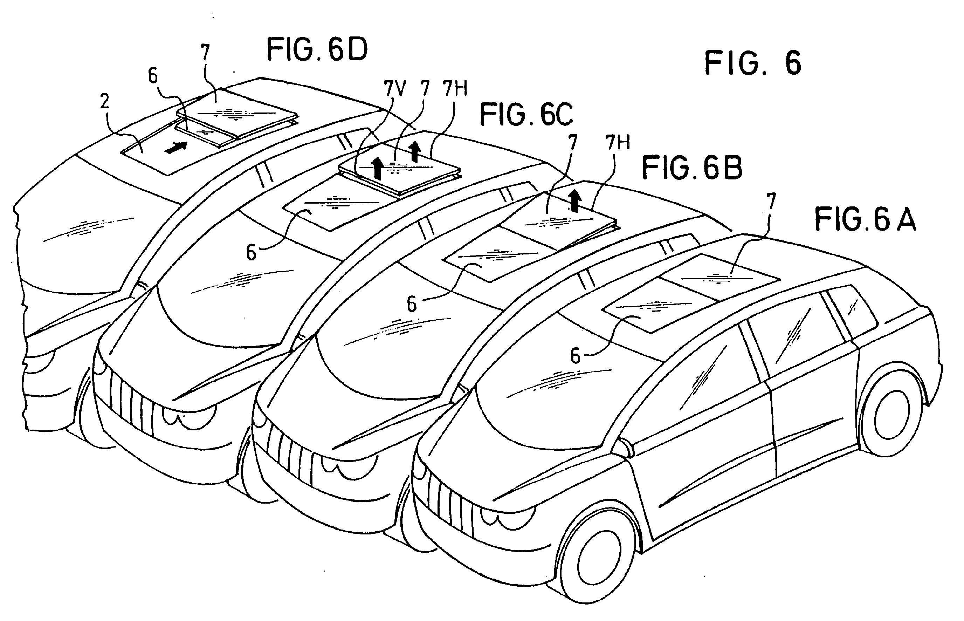

Für ein Zweideckeldach gemäß Figur 6 mit den Öffnungsvarianten gemäß den Figuren 6A bis D ist die in Figur 11 gezeigte Betätigungsmechanik geeignet. Wie in Figur 6 dargestellt, kann das Fahrzeugdach ausgehend von der in Figur 6A gezeigten Schließposition beider Deckel bzw. 7 zunächst in einem ersten Öffnungsschritt gemäß Figur 6B derart geöffnet werden, daß der hintere Deckel 7 mit seiner Hinterkante 7H nach oben über das feste Fahrzeugdach 1 angehoben wird. Der vordere Deckel 6 bleibt dabei noch geschlossen. In der nächsten Öffnungsposition wird der hintere Deckel 7 zusätzlich mit seiner Vorderkante 7V angehoben, so daß er sich dann in etwa parallel zum festen Fahrzeugdach 1 oberhalb von dessen Niveau befindet und rundherum einen Lüftungsspalt gegenüber der Dachöffnung 2 freigibt.

In dieser angehobenen Position des hinteren Deckels 7 fährt gemäß Figur 6D der vordere Deckel 6 teilweise oder vollständig unter den hinteren Deckel 7. Aufgrund von dessen angehobenen Niveau braucht der vordere Deckel 6 keinerlei Absenkmechanik, sondern kann auf demselben Niveau wie in seiner Schließpostion nach hinten verfahren werden. Für die Fahrzeuginsassen ergibt sich dadurch, daß in keiner Phase eine Beeinträchtigung der Kopffreiheit besteht.

Zum ersten Ausführungsbeispiel gemäß den Figuren 1 bis 6 gehörige Mechanik ist in der Figur 11 schematisch dargestellt. Der vordere Deckel 6 setzt sich aus einer Deckelplatte 21, bevorzugt aus einem transparenten Material wie Glas oder Kunststoff und einem die Deckelplatte 21 von unten her versteifenden Deckelrahmen 22 zusammen, an dem seitliche Laschen angeformt sind, die für eine Verbindung mit Gleitschuhen 16 ausgelegt sind. Die Gleitschuhe 16 sind über ein Antriebskabel 20 mit einem Elektromotor 19 verbunden, der im Bereich eines vorderen Rahmenteils 25 angeordnet ist. Durch Verschiebung des Antriebskabels 20 sind die Gleitschuhe 16 in der Führungsschiene 8 längs verschiebbar.

Der hintere Deckel 7 setzt sich aus einer ebenfalls bevorzugt aus transparentem Material wie Glas oder Kunststoff bestehenden Deckelplatte 23 und einer diese von unten versteifenden Deckelrahmen 24 zusammen. Am Deckelrahmen 24 sind wiederum seitlich Laschen angeformt, an denen eine Deckelkulisse 15 angebracht ist. Die Deckelkulisse 15 weist Führungsbolzen auf, die in Eingriff mit einem vorderen Kulissenschlitz 12 und einem hinteren Kulissenschlitz 13 einer Ausstellkulisse 11 stehen, welche ihrerseits mit Gleitschuhen 14 versehen ist und mit diesen in der Führungsschiene 9 verschiebbar geführt ist. Für die Verschiebung der Ausstellkulisse 11 ist ein Antriebskabel 27 vorgesehen, welches mit einem nicht dargestellten Elektromotor in Antriebsverbindung steht, der an einem hinteren Rahmenteil 26 angeordnet ist. Das hintere Rahmenteil 26 und das vordere Rahmenteil 25 sind mit den bevorzugt als ein einheitliches Profil ausgebildeten Führungsschienen 8 und 9 zu beiden Seiten verbunden und bilden dadurch einen geschlossenen Rahmen, an dem das öffnungsfähige Fahrzeugdach mit den beiden Deckeln 6 und 7 vormontiert als Baueinheit zum Fahrzeughersteller transportiert werden kann.

Anstelle des vorderen Elektromotors 19 und des hinteren nicht dargestellten Elektromotors können die Antriebskabel 20 und 27 auch über Handkurbeln oder dergleichen betätigbar sein.

Die nicht dargestellten Führungsbolzen an den Deckelkulissen 15 liegen bei geschlossenem Zustand des hinteren Deckels 7 an den vorderen Enden der Kulissenschlitze 12 und 13 an. Zum Ausstellen der Hinterkante 7H des Deckels 7 gemäß Figur 6B wird die Ausstellkulisse 11 mittels des Antriebskabels 27 um einen Betrag nach vorne verschoben, wobei der hintere Kulissenstift über die Rampe des hinteren Kulissenschlitzes 13 angehoben wird. Der vordere Führungsbolzen bleibt dabei noch im horizontalen vorderen Bereich des vorderen Kulissenschlitzes. Bei einem weiteren Verschieben der Ausstellkulisse 11 wird auch der vordere Führungsbolzen über die weiter hinter liegende Rampe des Kulissenschlitzes 12 angehoben, so daß der Deckel 7 dann die in Figur 6C dargestellte Position einnimmt. Der hintere Führungsbolzen durchläuft dabei den oberen horizontalen Abschnitt des hinteren Kulissenschlitzes 13 und verändert somit nicht die Höhenlange des Deckels 7. Damit die Deckelkulisse 15 bei der Verschiebung der Ausstellkulisse 11 nicht durch Reibungskräfte mitverschoben wird, ist entweder die Deckelkulisse 15 oder sind die nicht dargestellten Führungsbolzen zusätzlich in ortsfesten Führungen geführt, die nur eine vertikale jedoch keine horizontale Bewegung erlauben.

Der vordere Deckel 6 ist mittels einer einfachen Verschiebemechanik verschiebbar, die lediglich aus den am Deckelrahmen 22 angeordneten Gleitschuhen 16 steht, von denen wenigstens einer mit dem Antriebskabel 20 für eine Längsverschiebung in der Führungsschiene 8 verbunden ist. Bei vollständig angehobenem Deckel 7 gemäß Figur 6C ist der Antrieb 19 für eine Verschiebung des vorderen Deckels 6 freigegeben, so daß der vordere Bereich der Dachöffnung 2 durch Verschieben des Deckels 6 unter den Deckel 7 freigebbar ist.

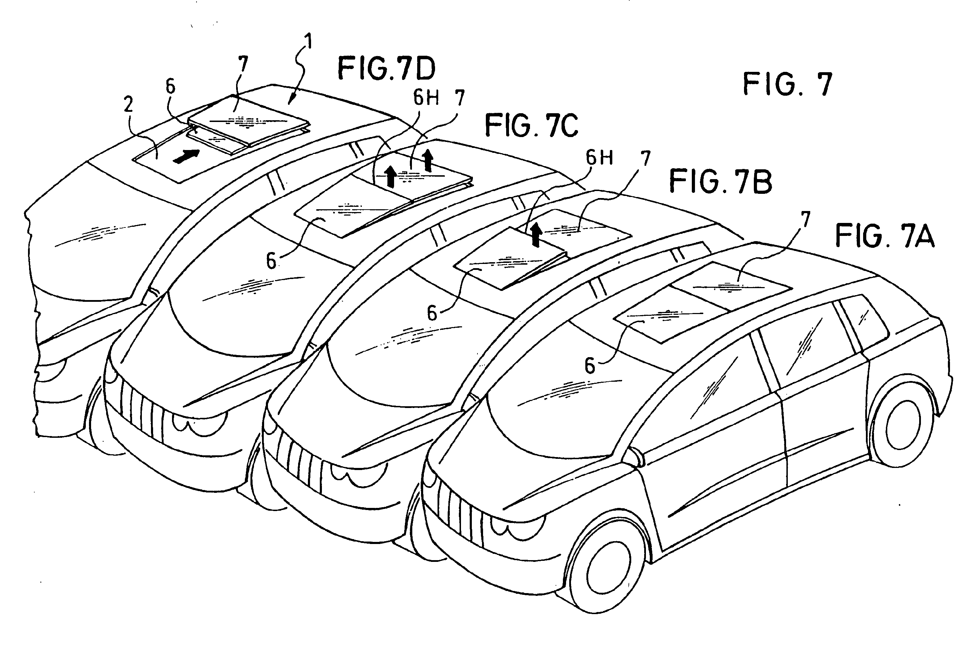

Bei der in Figur 7A bis 7D dargestellten Variante ist abweichend zum vorstehend beschriebenen Ausführungsbeispiel der vordere Deckel 6 ebenfalls mit einer Anhebemechanik versehen, so daß ausgehend von der in Figur 7A gezeigten Schließposition bei der in Figur 7B gezeigten Position der Deckel 6 mit seiner Hinterkante 6H in eine Lüfterposition ausstellbar ist. Zusätzlich oder unabhängig davon ist, wie in Figur 7C gezeigt, der Deckel 7 mittels der vorstehend beschriebenen Anhebemechanik vollständig anhebbar oder auch als Zwischenschritt mit seiner Hinterkante anhebbar, wobei dann an beiden Hinterkanten 6H und 7H zwei getrennte Lüftungsspalten freigegeben werden. Dagegen ist bei der in Figur 7C dargestellten Lüfterposition ein großer Lüftungsspalt ausgehend von der Hinterkante 7H des hinteren Deckels bis in den Seitenbereich des vorderen Deckels 6 hinein freigelegt. Die Öffnungsposition gemäß Figur 7D unterscheidet sich nicht von der in Figur 6D gezeigten Öffnungsposition. Der vordere Deckel 6 ist wiederum unter den vollständig angehobenen Deckel 7 nach hinten verfahren und gibt dabei einen Teil der Dachöffnung vollständig frei. Das erfindungsgemäße Fahrzeugdach hat den Vorteil, daß es mit einer sehr einfachen Mechanik verschiedene Öffnungsvarianten eines Zweideckeldaches ermöglicht und daß es aufgrund der sich erweiternden Dachöffnung als Gestaltungs- und Stilelement an einem Fahrzeug entsprechend von dessen Dachkontur angepasst werden kann. Dadurch, daß keiner der Deckel nach unten absenkbar ausgeführt sein muß, wird die Kopffreiheit für die Insassen in keiner Phase beeinträchtigt.

### Bezugszeichenliste

- 1: Fahrzeugdach
- 2: Dachöffnung
- 3: Vorderkante (von 2)
- 4: Hinterkante (von 2)
- 5: Seitenkante (von 2)
- 6: (vorderer) Deckel
- 6V: Vorderkante (von 6)
- 6H: Hinterkante (von 6)
- 7: (hinterer) Deckel
- 7V: Vorderkante (von 7)
- 7H: Hinterkante (von 7)
- 8: Führungsschiene (für 6)
- 9: Führungsschiene (für 7)
- 10: erweiterter Bereich (von 2)
- 11: Ausstellkulisse (von 7)
- 12: (vorderer) Kulissenschlitz (in 11)
- 13: (hinterer) Kulissenschlitz (in 11)
- 14: Gleitschuh (an 11)
- 15: Deckelkulisse (an 7)
- 16: Gleitschuh (an 6)
- 17: Kurvenbahn (an 5)
- 18: Dachmitte
- 19: Elektromotor
- 20: Antriebskabel
- 21: Deckelplatte (von 6)
- 22: Deckelrahmen (von 6)
- 23: Deckelplatte (von 7)
- 24: Deckelrahmen
- 25: vorderes Rahmenteil
- 26: hinteres Rahmenteil
- 27: Antriebskabel

## Patentansprüche

1. Öffnungsfähiges Fahrzeugdach
- mit wenigstens zwei hintereinander angeordneten Deckeln (6, 7),
- von denen einer ein schmalerer Deckel (6),
- und von denen der andere ein breiterer Deckel (7) ist,
- wobei der eine oder andere der beiden Deckel zum Freigeben eines Teils einer Dachöffnung (2) über oder unter den anderen oder den einen Deckel verschiebbar ist,
- wobei die Deckel (6, 7) gemeinsam die Dachöffnung (2) verschliessen,
**dadurch gekennzeichnet, dass**
- die Dachöffnung (2) eine schmalere Vorderkante (3) und eine breitere Hinterkante (4) mit einer sich ausgehend von der Vorderkante (3) zur Hinterkante (4) verbreiternden Form aufweist,
- wobei sich im hinteren Bereich der sich verbreiternden Form ein sich seitlich erweiternder Bereich (10) ergibt,
- wobei Führungs- und/oder Ausstellmittel (9, 11, 15) für den breiteren Deckel (7) am quer zur Fahrzeuglängsachse (18) gesehen äußeren Bereich des breiteren Deckels (7) sowie im erweiterten Bereich (10) der Dachöffnung (2) angeordnet sind.

2. Öffnungsfähiges Fahrzeugdach nach Anspruch 1, **dadurch gekennzeichnet, dass** sich Führungsschienen (8) des verschiebbaren Deckels (6) quer zur Fahrzeuglängsachse gesehen innerhalb der Führungs- und/oder Ausstellmittel (9,11) des anderen Deckels (7) erstrecken.

3. Öffnungsfähiges Fahrzeugdach nach einem der vorhergehenden Ansprüche, **dadurch gekennzeichnet, dass** die Dachöffnung (2) die Form eines Trapezes aufweist.

4. Öffnungsfähiges Fahrzeugdach nach Anspruch 1 oder 2, **dadurch gekennzeichnet, dass** die Seitenkanten (5) der Dachöffnung einer Kurvenbahn (17) folgen.

5. Öffnungsfähiges Fahrzeugdach nach einem der vorhergehenden Ansprüche, **dadurch gekennzeichnet, dass** der schmale Deckel (6) in Fahrtrichtung vom angeordnet ist.

6. Öffnungsfähiges Fahrzeugdach nach einem der vorhergehenden Ansprüche, **dadurch gekennzeichnet, dass** der schmalere Deckel (6) unter den breiteren Deckel (7) verfahrbar ist.

7. Öffnungsfähiges Fahrzeugdach nach einem der vorhergehenden Ansprüche, **dadurch gekennzeichnet, dass** der breitere Deckel (7) aus seiner Schließposition heraus anhebbar ist.

8. Öffnungsfähiges Fahrzeugdach nach Anspruch 7, **dadurch gekennzeichnet, dass** der breitere Deckel (7) mit seiner Hinterkante (7H) in eine Lüfterposition ausstellbar ist.

9. Öffnungsfähiges Fahrzeugdach nach einem der vorhergehenden Ansprüche, **dadurch gekennzeichnet, dass** der schmalere Deckel (6) mit seiner Hinterkante (6H) in eine Lüfterposition ausstellbar ist.

10. Öffnungsfähiges Fahrzeugdach nach einem der vorhergehenden Ansprüche, **dadurch gekennzeichnet, dass** beide Deckel (6, 7) in Schließposition bündig zueinander angeordnet sind.

## Claims

1. Openable vehicle roof
- having at least two panels (6, 7) arranged one behind the other,
- of which one is a narrower panel (6),
- and of which the other is a wider panel (7),
- it being possible for one or the other of the two panels to be displaced over or under the other or the one panel in order to expose a part of a roof opening (2),
- the panels (6, 7) jointly closing the roof opening (2),
**characterized in that**
- the roof opening (2) has a narrower front edge (3) and a wider rear edge (4) with a widening shape starting from the front edge (3) towards the rear edge (4),
- the result being a region (10) widening laterally in the rear region of the widening shape,
- guiding and/or raising means (9, 11, 15) for the wider panel (7) being arranged in the outer region of the wider panel (7), as seen transversely with respect to the vehicle longitudinal axis (18), and in the widened region (10) of the roof opening (2).

2. Openable vehicle roof according to Claim 1, **characterized in that**, as seen transversely with respect to the vehicle longitudinal axis (18), guide rails (8) of the displaceable panel (6) extend within the guiding and/or raising means (9, 11) of the other panel (7).

3. Openable vehicle roof according to one of the preceding claims, **characterized in that** the roof opening (2) has the shape of a trapezium.

4. Openable vehicle roof according to Claim 1 or 2, **characterized in that** the side edges (5) of the roof opening follow a curved path (17).

5. Openable vehicle roof according to one of the preceding claims, **characterized in that** the narrow panel (6) is arranged at the front in the direction of travel.

6. Openable vehicle roof according to one of the preceding claims, **characterized in that** the narrower panel (6) can be moved under the wider panel (7).

7. Openable vehicle roof according to one of the preceding claims, **characterized in that** the wider panel (7) can be raised from its closed position.

8. Openable vehicle roof according to Claim 7, **characterized in that** the rear edge (7H) of the wider panel (7) can be raised into a ventilation position.

9. Openable vehicle roof according to one of the preceding claims, **characterized in that** the rear edge (6H) of the narrower panel (6) can be raised into a ventilation position.

10. Openable vehicle roof according to one of the preceding claims, **characterized in that** the two panels (6, 7) are arranged flush with each other when in the closed position.

## Revendications

1. Toit ouvrant de véhicule
- avec au moins deux panneaux (6, 7) disposés l'un à la suite de l'autre,
- dont l'un est un panneau plus étroit (6),
- et l'autre un panneau plus large (7),
- l'un ou l'autre des deux panneaux pouvant être coulissé au-dessus ou en dessous de l'autre panneau afin de dégager une partie d'une ouverture de toit (2),
- les panneaux (6, 7) fermant conjointement l'ouverture de toit (2),
**caractérisé en ce que**
- l'ouverture de toit (2) présente un bord avant plus étroit (3) et un bord arrière plus large (4), avec une forme allant en s'élargissant du bord avant (3) au bord arrière (4),
- sachant qu'on obtient dans la région arrière de la forme allant en s'élargissant une région (10) s'élargissant latéralement,
- sachant que des moyens (9, 11, 15) de guidage et/ou de relevage pour le panneau plus large (7) sont disposés sur la région extérieure, considéré transversalement à l'axe longitudinal (18) du véhicule, du panneau plus large (7) ainsi que dans la région élargie (10) de l'ouverture de toit (2).

2. Toit ouvrant de véhicule selon la revendication 1, **caractérisé en ce que** des rails de guidage (8) du panneau coulissant (6) s'étendent, considéré transversalement à l'axe longitudinal du véhicule, à l'intérieur des moyens (9, 11) de guidage et/ou de relevage de l'autre panneau (7).

3. Toit ouvrant de véhicule selon l'une des revendications précédentes, **caractérisé en ce que** l'ouverture de toit (2) présente la forme d'un trapèze.

4. Toit ouvrant de véhicule selon la revendication 1 ou 2, **caractérisé en ce que** les bords latéraux (5) de l'ouverture de toit suivent une trajectoire courbe (17).

5. Toit ouvrant de véhicule selon l'une des revendications précédentes, **caractérisé en ce que** le panneau étroit (6) est disposé à l'avant dans la direction de marche.

6. Toit ouvrant de véhicule selon l'une des revendications précédentes, **caractérisé en ce que** le panneau plus étroit (6) peut être déplacé sous le panneau plus large (7).

7. Toit ouvrant de véhicule selon l'une des revendications précédentes, **caractérisé en ce que** le panneau plus large (7) peut être soulevé à partir de sa position fermée.

8. Toit ouvrant de véhicule selon la revendication 7, **caractérisé en ce que** le panneau plus large (7) peut être relevé par son bord arrière (7H) dans une position de ventilation.

9. Toit ouvrant de véhicule selon l'une des revendications précédentes, **caractérisé en ce que** le panneau plus étroit (6) peut être relevé par son bord arrière (6H) dans une position de ventilation.

10. Toit ouvrant de véhicule selon l'une des revendications précédentes, **caractérisé en ce que** les deux panneaux (6, 7) sont disposés à fleur l'un de l'autre en position fermée.
